# EUROPÄISCHE PATENTSCHRIFT

(11) **EP 4 548 807 B1**
(45) Veröffentlichungstag und Bekanntmachung des Hinweises auf die Patenterteilung: **24.06.2026**
(21) Anmeldenummer: 24196579.7
(22) Anmeldetag: 27.08.2024
(51) Int. Cl.: A47B 47/05

(54) **RECHTWINKELIGE FACHWERK-STRUKTUR MIT HOHER STABILITÄT UND GESTALTUNGSFREIHEIT, ALS RAUMGLIEDERUNG ODER REGAL**
SQUARE TRUSS STRUCTURE WITH HIGH STABILITY AND FREEDOM OF CONFIGURATION, AS SPACE DIVISION OR SHELF
STRUCTURE EN TREILLIS À ANGLE DROIT ET À HAUTE STABILITÉ ET LIBERTÉ DE CONCEPTION, FAISANT OFFICE DE STRUCTURE OU D'ÉTAGÈRE

(30) Priorität: 30.10.2023 AT 508712023
(43) Veröffentlichungstag der Anmeldung: 07.05.2025
(73) Patentinhaber: Blaha, Friedrich, 2100 Korneuburg/Bisamberg (AT)
(72) Erfinder: Blaha, Friedrich, 2100 Korneuburg/Bisamberg (AT)
(74) Vertreter: Patentanwälte Barger, Piso & Partner

(56) Entgegenhaltungen:
- EP-A1- 3 604 830
- US-A1- 2009 175 679
- US-A1- 2019 210 812

## Beschreibung

In letzter Zeit haben sich nicht nur in der Bürowelt metallische Raumstrukturen vermehrt durchgesetzt, welche aus einem zierlichen, zumeist quadratischen oder rechtwinkeligen Gitterwerk als Tragestruktur bestehen, in deren von Stäben begrenzten Flächen, Quadern und Würfeln Ablage- und Begrenzungsflächen eingesetzt, oder auch passende Kästchen oder Schubladen eingeschoben sind, deren Anordnung nach Bedarf frei gewählt und geändert werden kann.

Während bekannte leichte metallische Raumstrukturen, deren Stäbe Dreiecke bilden, eine überragende Stabilität aufweisen, weil deren Streben nur durch Zug- und Druckkräfte beansprucht werden, selbst wenn sie nicht biegesteif miteinander verbunden sind, wie etwa bei Masten, Kränen, Brücken, Bühnenelementen und anderen Dreiecks-Fachwerken, so ist die Stabilität rechtwinkeliger Fachwerke nur durch die Biegefestigkeit der Stäbe und insbesonders der Fachwerk-Knoten bestimmt. Diagonale Verstrebungen zur Bildung stabilisierender Dreiecke, wie sie etwa bei klassischen Lagerregalen üblich sind, verbieten sich hier aus gestalterischen Gründen schon von selbst. Lediglich Boden- und Wandeinsätze oder Schrankelemente sorgen lokal für eine Stabilisierung, allerdings nur, wenn sie auch fest mit dem Fachwerk verbunden sind, was aber eine spätere Änderung ihrer Anordnung sehr erschwert. Viel besser geeignet wäre ein rechtwinkeliges Fachwerk, das bereits in sich eine maximale Basis-Stabilität aufweist.

Viele vorhandene Lösungen bieten Baukastensysteme an, welche aus Stäben und Knotenteilen bestehen, wobei sie sich in der Art der Verbindung dieser Elemente unterscheiden. Als "Knoten" wird hier das beliebige Aufeinandertreffen von mindestens zwei Streben bezeichnet, unabhängig davon, ob deren Enden aufeinander treffen, also auch Abzweigungen und Kreuzungen.

Altbekannt sind die Möbel von USM Haller, welche an den Möbelkanten einen Metallrahmen aus Streben mit kugeligen Verbindern an den Ecken aufweisen.

Ebenso sind Stecksysteme bekannt (z.B. GB1322514A Varichon oder Gebrauchsmuster DE29601648U1 Fehlbaum), deren Streben an den Ecken mittels einsteckbaren Winkelteilen, T-Stücken, Kreuzen und auch einen oder zwei Fortsätze rechtwinkelig dazu aufweisenden Eck-Elementen zu einem räumlichen rechtwinkeligen Fachwerk zusammengesteckt und mittels unscheinbarer Querschrauben fixiert werden.

Ebenso sind Systeme bekannt, welche nur einzelne Steckelemente aufweisen, welche in notwendiger Anzahl und Richtung an einer Strebe befestigt und mit weiterführenden Streben verbunden werden.

Beispielsweise zeigt das Gebrauchsmuster DE20319373U1 eine solche Lösung, wobei ein Knotenelement (7) mit Gewinden in eine Strebe eingebracht wird, wobei Schrauben (14) durch Bohrungen in den Streben im Knotenelement verankert und mit Kontermutter fixiert sind, und dann zur Fixierung der Streben dienen.

Die CN110030244A zeigt eine Eckverbindung dreier rechtwinkelig aufeinander stehender Streben mittels Spannkeilen und Eckenabdeckung.

Die DE102017130758A1 (Schlehmeier) zeigt ebenfalls einen Streben-Einschub, auf welchen ein Fortsatz durch ein Loch angeschraubt wird und mittels innenliegender Querschraube eine verspannende Arretierung der drüber gesteckten Strebe erfolgt.

Die EP4039131A1 (Concept-s) zeigt eine Konstruktionsweise eines rechtwinkeligen Fachwerks mittels Rohrrahmen, welche durch Einschneiden und Aufbiegen entstehen und mittels Bolzen in Querstreben zusammengefügt werden.

Die US 2019/210812 A1 zeigt eine weitere Fachwerkstruktur.

Alle vorgestellten Bauweisen weisen entweder Streben auf, welche von Knoten zu Knoten führen, wo sie kraftschlüssig gestückelt werden, oder in einer Richtung durchlaufende Streben, welche mit gestückelten Querverbindungen oder Streben kraftschlüssig verbunden sind. Diese Verbindungen sind oft aufwändig gestaltet und langwierig zu montieren, haben eingeschränkte Verwendbarkeit etwa nur an Ecken und ergeben ein Fachwerk mit eingeschränkter Stabilität. Gerade im Bürobereich ist eine fühlbare Stabilität ein Qualitätskriterium, abgesehen von schon lange genormten Sicherheitsvorschriften zur Standfestigkeit und Seitenstabilität. Einige Ausgestaltungen erlauben sehr flexible Gestaltungen der Fachwerke, auch mit nachträglichen Änderungen und Erweiterungen.

Aufgabe der Erfindung war, ein maximal stabiles Fachwerk mit gleichem oder ähnlichem Erscheinungsbild zum Mitbewerb und geringen Kosten zumindest für Basiselemente zu entwickeln und kompatibel zu nachträglichen Ergänzungen und Kombinationen mittels eher klassisch aufgebauten Verbindungen und Streben zu halten, um somit ein Zusammenspiel von Stabilität und Flexibilität in Gestalt eines Misch-Systems zu erhalten. Hierbei werden, wo immer möglich und sinnvoll, vertikal und horizontal durchgehende Streben verwendet, deren Kreuzungsknoten eine hohe spielfreie Winkelstabilität aufweisen und deren Ecken und Endstreben ansprechend gestaltet sind, aber gleichzeitig auch eine Montage weiterführender Verbindungen erlauben.

Da diese Verbindungen im Zusammenspiel mit den hoch winkelstabilen Basis-Elementen für sich selbst keine besondere Winkel-stabilisierende Wirkung entfalten müssen, sondern im Wesentlichen nur durch Zug- und Scherkräfte beansprucht sind, können sie relativ einfach aufgebaut und befestigt sein.

Diese Aufgabe wird durch eine Fachwerkstruktur gemäß Anspruch 1 gelöst.

Die hohe Winkelstabilität wird durch spezielle Ausnehmungen in den Streben erzeugt, die das Kreuzen der Streben unter Ausbildung eines Formschlusses ermöglichen, wenn die Streben mittels Schraubverbindungen zusammengespannt sind. Die Ausnehmungen können auch an Ecken und Kanten identisch vorgesehen werden, wo sie für ein glattes, geschlossenes äußeres Erscheinungsbild sorgen, welches mit einfachen Mitteln erweitert werden kann.

Die Erfindung wird nun anhand von Darstellungen erläutert. Es zeigt Fig. 1 anschaulich eine erfindungsgemäße Fachwerkstruktur, Fig. 2 anschaulich eine Strebe mit erfindungsgemäßen Ausnehmungen, Fig. 3 A bis 3 C ebenfalls anschaulich das Zusammenfügen von solcherart bearbeiteten Streben zu einem Kreuzknoten, Fig.4 mehrere Erweiterungsmöglichkeiten einer erfindungsgemäßen Fachwerkstruktur in anschaulicher Explosionsdarstellung, Fig. 5 einen befestigten Konnektor mit verspannter Strebe im Vertikalschnitt, Fig. 6 Zugelemente in anschaulicher Darstellung zum Zusammenbau einer Struktur samt Verlängerungen, Fig. 7 ebenfalls anschaulich die allseitige Bestückung einer Strebe mit Konnektoren und anschließenden Streben, Fig. 8 zeigt anschaulich den Einsatz von gebogenen oder auf Gehrung geschnittenen Streben für beliebige Richtungsänderungen der Fachwerkstruktur, Fig. 9 A und B Horizontalschnitte durch die dafür notwendigen Konnektoren samt Streben und Fig. 10 einen Vertikalschnitt durch eine weitere Verspannungsmöglichkeit mit einem Konnektor.

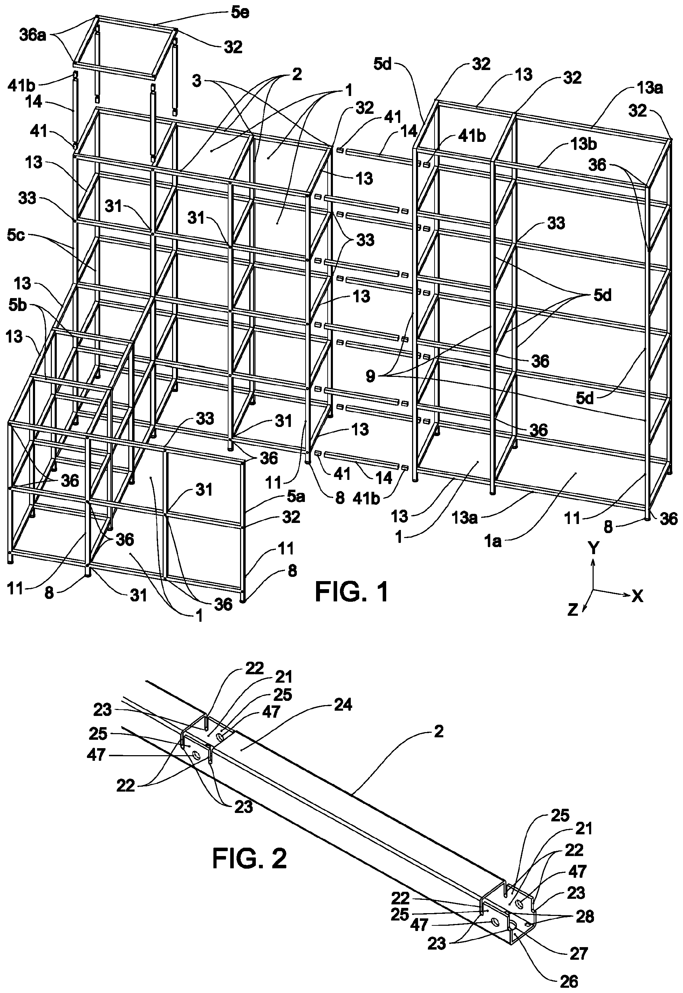

Fig. 1 zeigt eine erfindungsgemäße rechtwinkelige Fachwerkstruktur in mehreren Ausprägungen samt Ergänzungselementen und verschiedenen Höhen-Einheiten räumlich dargestellt. Bezugsnummern von Teilen, auf welche in dieser Figur hingewiesen wird, aber nicht sichtbar sind und erst in weiteren Figuren erläutert werden, sind in Klammern gesetzt. Die Ausgestaltung der Fachwerkstruktur mit Fachböden, Seiten- und Rückwänden oder Laden- und Türelementen ist hingegen nicht Inhalt dieser Anmeldung. Zur leichteren Orientierung in der Beschreibung ist eine X-Y-Z-Triade eingezeichnet.

Grundsätzlich besteht eine erfindungsgemäße Fachwerkstruktur aus einer Kombination von Einheiten 1. Eine solche Einheit stellt einen leeren Quader oder Würfel dar, dessen Kanten durch Streben 2 gebildet werden, die an den Ecken in sogenannten Knoten 3 miteinander verbunden sind. Durch gedankliches Übereinanderstapeln oder Aneinanderreihen dieser Einheiten 1 ergibt sich eine beliebig große, raumgreifende rechtwinkelige Fachwerkstruktur. Auch wenn Breite, Tiefe und Höhe einer Einheit 1 beliebig wählbar sind, so empfehlen sich doch anwendungsorientierte Abmessungen, etwa analog zu den sogenannten "Ordnerhöhen" bei Schränken. Im Fall gleicher Abmessungen entsteht eine würfelige Struktur, welche den Vorteil bietet, dass das ausgestaltende Zubehör in allen Richtungen und Orientierungen eingefügt werden kann, und es entstehen auch Vereinfachungen bei der Herstellung, etwa durch gleiche Bauteile und Strebenlängen in Rastermaßen. Hierdurch ergibt sich auch ein klares Erscheinungsbild. Zum Boden zu sind die vertikalen Streben 11 etwas nach unten verlängert, zur Aufnahme eines handelsüblichen Gewindestopfens mit eingedrehtem Stellgleiter 8.

Bei jeder geplanten Fachwerkstruktur stellt sich die Frage der Umsetzung. So kann entweder jede Struktur individuell umgesetzt werden, oder man arbeitet mit günstig herstellbaren, häufig benötigten Basis-Elementen, welche in nahezu jeder Planung enthalten sind, wie etwa Elementen mit zwei bis sechs oder sieben übereinander angeordneten Einheiten 1, und erweitert diese dann mittels Anbau-Elementen oder verkettet sie miteinander zur geplanten Struktur, wie etwa bei Regalsystemen bekannt. Die individuelle Umsetzung ist jedoch wesentlich stabiler aufbaubar, denn sie bietet die Möglichkeit, besonders viele durchgängige Streben zu verwenden und diese mit den erfindungsgemäßen Ausnehmungen (21) in Kreuzknoten 31 und randseits mit Eckknoten 32 und Endknoten 33 winkelstabil zu verbinden. In diesem Fall entstehen meist Gitter aus einander kreuzenden Streben, welche dann untereinander mittels Distanzstreben 13 und Zugelementen (6), oder Verbindungsstreben 14 und Konnektoren 41, 41b zusammengespannt werden.

Das dargestellte Fachwerk beinhaltet eine solche Würfelstruktur und kann als Kombination unterschiedlich großer Gitter angesehen werden. Nächst zum Betrachter liegend erkennt man ein großteils freistehendes Gitter 5a in der X-Y-Ebene als beabsichtigte Trennwand gegenüber Kunden, drei Einheiten 1 breit und zwei Einheiten hoch. Daran schließen sich in die Tiefe Richtung -Z drei gleich hohe Strukturelemente mit je zwei Einheiten 1 an, welche etwa als Verkaufstheke ausgestaltbar sind, es sind zwei Gitter 5b in X-Y-Richtung mit je zwei Einheiten in Y-Richtung erkennbar. Daran schließen sich ums Eck in X-Richtung wiederum drei Strukturelemente an, die aber vier Einheiten 1 hoch sind und etwa mit Waren zur Präsentation ausgestattet werden können. Sie entstehen aus 2 Gittern 5c mit drei Einheiten in X-Richtung und vier Einheiten in Y-Richtung.

Diese fünf Gitter werden fluchtend aufgestellt und mittels Distanzstreben 13 auf Abstand gehalten, während ein hier nicht sichtbares Zugelement (6), etwa ein Gewinderohr (34) passender Länge durch die Durchgangslöcher (27) und Distanzstreben 13 geschoben und das Ganze an den Enden mit Schrauben 36 zusammengehalten wird. Ist die Struktur vollständig zusammengebaut, werden die Schrauben 36 festgezogen und damit die ganze Anordnung zusammengespannt. Sie kann nun in ihre Position gebracht und bestückt werden.

Diese vorhandene Fachwerkstruktur wird nun später um ein Strukturelement erweitert, das als Garderobe 9 mit Ablagemöglichkeiten ausgestaltet wird. Dieses Element besteht aus drei Gittern 5d in X-Z-Orientierung, fünf Einheiten hoch und unterschiedlich breiten Einheiten 1 und 1a und damit unterschiedlich langen Distanzstreben 13, 13a und passenden Zugelementen (6), welche in X-Richtung verlaufen. Während auf der rechten Seite und innen die vorgesehenen Schrauben 36 Verwendung finden, werden an der linken Seite die Zugelemente gleich mit Konnektoren 41b direkt verschraubt, welche dafür ein passendes Gewinde (49) aufweisen. An der bestehenden Struktur werden die Konnektoren 41 an den Eck- und Endknoten 32, 33 eingeschraubt. Nun können die beiden Einheiten mit den Verbindungsstreben 14 zusammengesteckt und geklemmt werden, wodurch sich ein weiteres nutzbares Element bildet.

Die vordere horizontale Strebe 13b kann hierbei auch mit größerem ovalem Querschnitt und hartverchromter Oberfläche wie bekannt als Kleiderstange ausgeführt, in die unterste horizontale Rahmenposition kann eine Schuhablage eingehängt sein.

Anstelle der Garderobe 9 könnte die bestehende Fachwerkstruktur auch nur um ein Element erweitert werden, wobei nur ein Gitter 5d mit nur vier Einheiten mittels längerer Schrauben 36a direkt in die Schraubengewinde (49) der Konnektoren 41b geschraubt und mit Verbindungsstreben 14 und Konnektoren 41 an der vorhandenen Struktur befestigt wird.

Die Garderobe 9 ist hier um eine Einheit höher als die angrenzende Struktur, welche nun noch um eine Einheit erhöht werden soll, wofür Konnektoren 41 in Y-Richtung an den oberen Knoten 3 befestigt und Verbindungsstreben 14 aufgeschoben werden. Der Abschluss erfolgt durch ein kleines Gitter 5e als Rahmen in X-Z-Richtung, dessen Knoten 32 mit längeren Schrauben 36a ebenfalls direkt in das Schraubengewinde (49) der Konnektoren 41b an den Ecken festgeschraubt werden und diese Anordnung anschließend in die mit Konnektoren 41 befestigten Verbindungsstreben 14 eingeschoben und geklemmt wird.

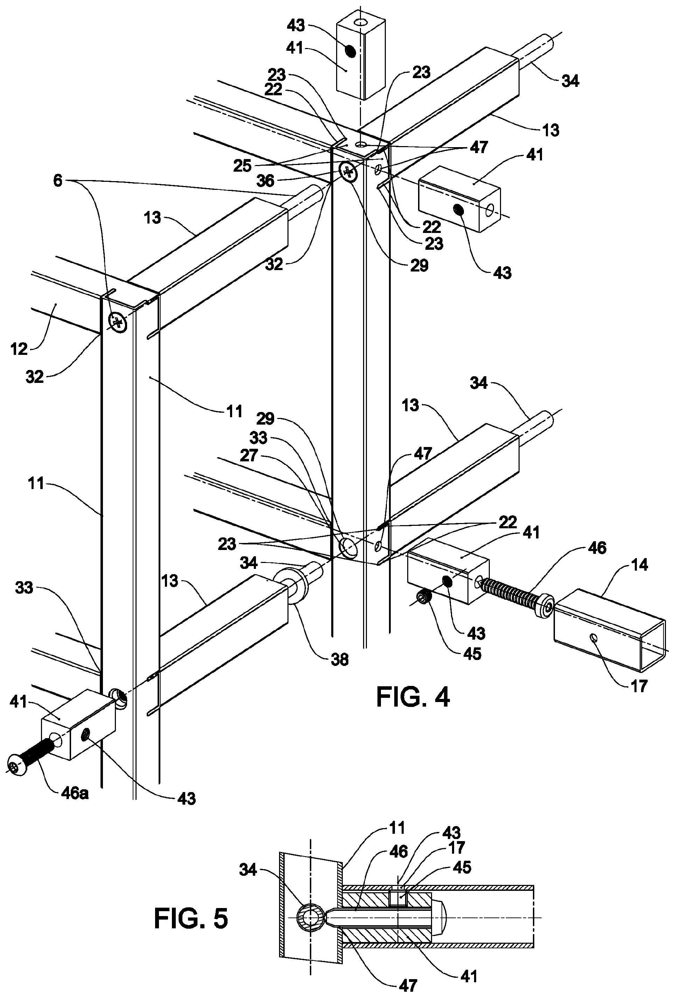

Die Verwendung möglichst vieler durchgehender kreuzender Streben wird deshalb hervorgehoben, weil die erfindungsgemäßen Kreuzknoten 31, wie nun gezeigt wird, in Summe eine überaus große Stabilität erzeugen, mit der ein klassisches Baukastensystem nicht mithalten kann. Als Kreuzknoten 31 zählen auch Knoten an Ecken und Kanten, sofern sie dort die erfindungsgemäßen Ausnehmungen 21 aufweisen, wie etwa die Eckknoten 32 und Endknoten 33 in Fig. 4.

Fig. 2 zeigt diese Ausnehmungen 21 in einer Strebe 2, welche diese Stabilität bewirken und zusätzlich eine achsgenaue Erweiterungsmöglichkeit mittels Konnektoren (41) erlauben. Eine Ausnehmung 21 besteht aus zwei gleichartigen Einschnitten 22 mit Ausrundung 23, welche nur ein wenig breiter sind als die Wandstärke der nicht dargestellten kreuzenden Strebe, und deren Mittelabstand gleich dem Mittelabstand der Seitenwände der kreuzenden Strebe ist, und welche sich etwa bis zur Mitte der Strebe 2 erstrecken. Die dazwischen befindliche Deckfläche 24 ist entfernt. An der Bodenfläche 26 der Strebe 2 befindet sich mittig zur Ausnehmung 21 noch ein Durchgangsloch 27 für die Zugelemente (6). Optional kann eine Zentrierung 28 eingeprägt sein, welche eine von unten anstoßende Distanzstrebe (13) positionieren würde. Fig. 2 zeigt auch, dass die beschriebene Ausnehmung 21 unmittelbar an das Ende der Strebe 2 gesetzt werden kann, wodurch die kreuzenden Streben an den äußeren Ecken und Kanten einen geschlossenen Eindruck gemäß Fig. 4 erwecken, sodass keine separaten Rohrstoppel für eine Abdeckung von Öffnungen notwendig sind. In den gebildeten Laschen 25 in den Seitenwänden der Strebe 2 können optional bereits Befestigungslöcher 47 für die Konnektoren (41) eingebracht sein, sofern sie nicht als störend empfunden werden. Grundsätzlich lassen sich diese Befestigungslöcher 47 auch nur nach Bedarf nachträglich präzise einbringen, etwa durch Verwendung einer Bohrschablone.

Die Ausnehmung samt Löchern kann natürlich einfach und schnell mit einem Rohr-Laserschneider hergestellt werden, aber es geht auch herkömmlich mittels mechanischer Bearbeitung, auch unter Einsatz eines Formfräsers. Bei Streben aus Aluminium ist auch HSC-Fräsen eine Option. Die Zentrierung 28 benötigt nur ein einfaches Stanz-/Prägewerkzeug in einer kleinen Tischpresse.

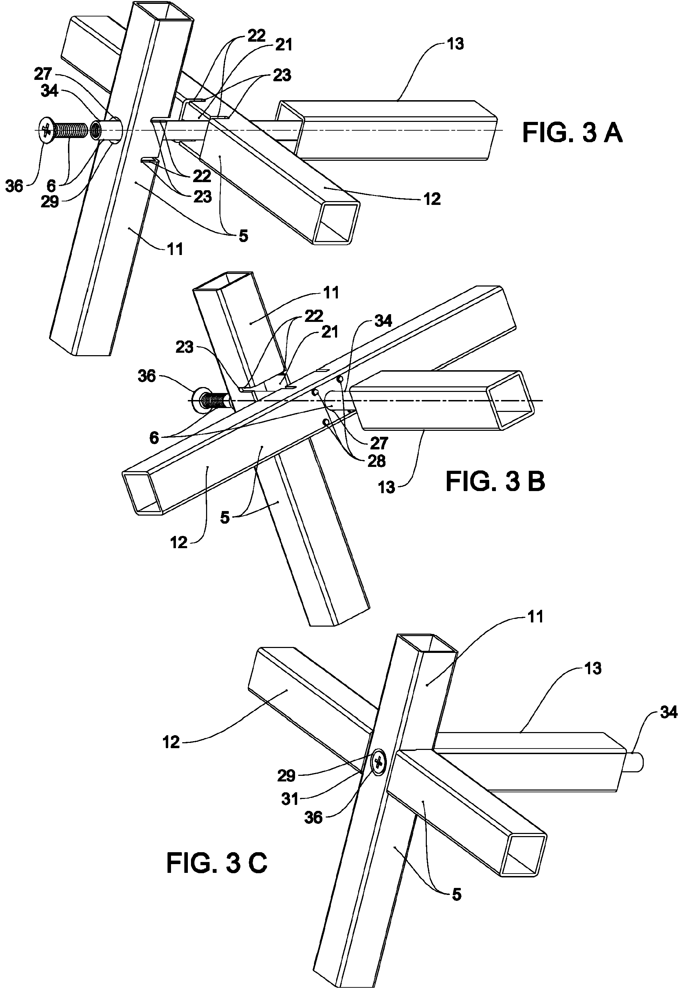

Fig. 3 A bis C zeigen das Zusammenfügen eines Kreuzknotens 31 innerhalb eines Gitters 5 in drei anschaulichen Bildern. Fig. 3 A zeigt eine Explosionsdarstellung von außerhalb, Fig. 3 B von der Rückseite und Fig. C das verschraubte Ergebnis. Die vertikalen und horizontalen Streben 11, 12 werden mit ihren Ausnehmungen 21 gegeneinander weisend kreuzend ineinander gefügt. Hierbei gelangen die einander zugekehrten Ausrundungen 23 der Einschnitte 22 zur kreuzenden Anlage ineinander. Wird diese Kreuzung mittels eines Zugelements 6, das durch die Durchgangslöcher 27 und die Distanzstrebe 13 läuft, hier dargestellt mit einem Gewinderohr 34 und einer versenkten Schraube 36 festgezogen, so ergibt sich eine formschlüssige äußerst winkelsteife Verbindung. Zusammen mit dem relativ großen Restquerschnitt der Streben 11, 12 bei der Ausnehmung 21 und das Zusammenwirken aller Kreuzknoten 31 erfolgt eine besonders hohe Versteifung und Tragfähigkeit des ganzen Gitterwerks. In Fig. 3 B ist die geprägte Zentrierung 28 für die Distanzstrebe 13 besonders gut zu erkennen. Sie kann durchaus auch etwas anders gestaltet sein. Verdrehbare Distanzstreben 13 sind nicht nur hässlich anzusehen, sie könnten Probleme bei Einbauten machen. Fig. 3 C zeigt den fertig verspannten Kreuzknoten 31, als Bestandteil eines Gitters 5, wobei die rückseitige Fixierung des Zugelements nicht dargestellt ist, aber grundsätzlich ein gleichartiger Kreuzknoten vorhanden sein kann. Die Zugelemente 6, bestehend aus Gewinderohr 34 und Schraube 36, zusammen mit den Distanzstreben 13 sind verantwortlich für die Stabilität der Gitter 5 zueinander und bedürfen dazu einer deutlichen Vorspannung. Die Schraube 36 schließt durch eine Senkung 29 im Durchgangsloch 27 bündig mit der Oberfläche ab.

Fig. 4 zeigt in anschaulicher Weise einerseits die geschlossen erscheinenden Eckknoten 32 und Endknoten 33 einer erfindungsgemäßen Fachwerkstruktur, sowie einige Erweiterungsmöglichkeiten. Solche Erweiterungen finden zumeist an den vertikalen Streben 11 einer vorhandenen Fachwerkstruktur statt. Im Mittelbereich der Darstellung ist ein oberer Eckknoten 32 und mittig liegender Endknoten 33 inklusive der nach unten führenden vertikalen Strebe 11 zu sehen. Es sind bereits die optionalen Befestigungslöcher 47 für die Konnektoren 41 eingebracht, welche sowohl seitlich an den Endknoten 33 als auch oben und seitlich direkt an den Eckknoten 32 etwa mit gewindeformenden Befestigungsschrauben 46 angeschraubt und dabei ausgerichtet werden können. Nach deren Befestigung wird in ihr querliegendes Gewinde 43 eine kurze Wurmschraube 45 eingedreht, die Verbindungsstrebe 14 darüber gesteckt und von außen durch ein passend positioniertes Spannloch 17 in der Verbindungsstrebe 14 die Wurmschraube 45 mittels eines Schraubendrehers so verdreht, dass sie mit dem Konnektor 41 in an sich bekannter Weise verspannt wird.

Es ist auch eine Erweiterung der Fachwerkstruktur in der Tiefe möglich. Hierzu werden die vorhandenen Schrauben 36 der Zugelemente 6 entfernt und entweder ein längeres Gewinderohr 34 eingefädelt oder mittels langer Wurmschraube (45a) ein weiteres Gewinderohr 34 angestückelt, die zusätzlichen Distanzstreben 13 aufgefädelt und die zusätzlichen Gitterstreben 11, 12 über die Durchgangslöcher 27 aufgesteckt und mit den Schrauben 36 neu verspannt. Fehlen Zentrierungen 28 zur Positionierung der Distanzstreben 13, etwa im Fall von Ergänzungen, so kann man auf die Gewinderohre 34 elastische Zentrierscheiben 38 zur Zentrierung der Distanzstreben 13 aufstecken.

Ebenso können auch anstelle der Schrauben 36 Konnektoren 41 mittels anderen Gewindeschrauben 36a direkt mit dem Gewinderohr 34 verspannt und ausgerichtet werden, wie links unten dargestellt, falls eine Verkettung auch in dieser Richtung benötigt wird.

Fig. 5 zeigt einen Vertikalschnitt durch die Befestigung eines Konnektors 41. Dieser ist an einem Knoten oder auch an beliebiger Stelle einer Strebe zu befestigen. Er passt genau in das Strebenprofil und weist mittig ein Schraubenloch 42 für eine Befestigungsschraube 46 oder 46a und ein querliegendes Gewinde 43 für eine kurze Wurmschraube 45 zum Verspannen von Verbindungsstreben 14 auf. Er wird durch eine gewindeformende Befestigungsschraube 46 gehalten, welche ins Befestigungsloch 47 gedreht und dabei der Konnektor 41 etwa mit einem Gabelschlüssel so ausgerichtet wird, dass sein querliegendes Gewinde 43 mit dem Spannloch 17 in der Verbindungsstrebe 14 zusammenfällt.

Diese Verbindung ist wieder lösbar und danach keine auffällige Beschädigung zu erkennen. Man kann aber auch, wenn kein späterer Umbau zu erwarten ist, anstelle der Befestigungsschraube 46 maßidentische Blindnieten verwenden. Natürlich kann auch ein metrisches Gewinde eingeschnitten oder eingeformt werden. Insbesonders für größer dimensionierte Fachwerkstrukturen empfiehlt sich auch der Einsatz von Gewindenietmuttern.

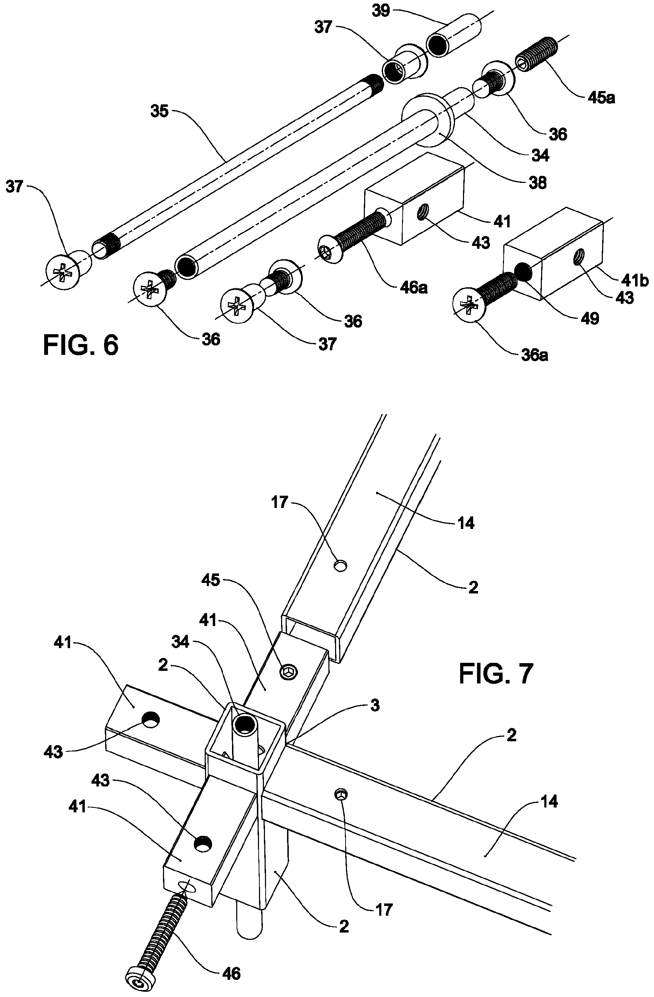

Fig. 6 zeigt Zugelemente zur Verspannung der distanzierten Gitter. Grundsätzlich können Gewindestangen 35 mit Hülsenmuttern 37 oder Gewinderohre 34 mit Schrauben 36 verwendet werden. Ein Verlängern der Gewindestangen 35 erfolgt mit handelsüblichen Gewindemuffen 39 oder Gewinderohre 34, ein Verlängern der Gewinderohre 34 mit langen Wurmschrauben 45a oder Gewindestangen 35. Die Gewinderohre 34 oder Gewindestangen 35 benötigen Gewinde nur an ihren Enden. Wenn Hülsenmuttern 37 und Schrauben 36 die gleiche Kopfform und gleichen Antrieb haben, ist auch ein Mischsystem mit Gewinderohren und Gewindestangen und Hülsenmutter 37 und Schraube 36 an den Enden möglich. Der Einsatz von Gewinderohren ist vorzuziehen, weil diese in den Durchgangslöchern (27) besser zentriert werden, wodurch auch eine Distanzstrebe (13) mit aufgesteckten Zentrierscheiben (38) genau und tragfähig zentrierbar ist. Denn zumindest bei Ergänzungen sind auf der Anschlussseite keine Zentrierungen (28) eingeprägt.

Werden nur zwei vertikale oder horizontale Streben (11, 12) im Kreuzknoten (31) direkt verspannt, etwa in einem Gitter (5), so ist dafür nur eine Hülsenmutter 37 und Schraube 36 erforderlich, wie bei handelsüblichen Schrankverbindern schon lange im Einsatz. Bei deren Herstellern sind auch unterschiedliche Kopfformen und Antriebe erhältlich. Die Figuren zeigen jedoch immer Schraubenlöcher mit Senkungen, weil diese dem Gestaltungsideal der Fachwerkstruktur am nächsten kommen. Es sind auch Flachköpfe erhältlich, welche keine Senkungen (29) benötigen. Hierbei wären die vorstehenden flachen Köpfe zu akzeptieren, bzw. gegen den Zusatzaufwand der Senkungen (29) abzuwägen.

Ebenso ist hier auch ein Konnektor 41 mit einem Schraubenloch 42 passend für eine Gewindeschraube 46 als weitere Verankerungsmöglichkeit der Zugelemente 6 im Fall einer Strukturerweiterung dargestellt.

Um einen Kreuzknoten (31) in einem Gitter (5) direkt mit einem Konnektor 41 zu verspannen, werden lange Schrauben 36a in ein Schraubengewinde 49 im Schraubenloch 42 des Konnektors 41b eingeschraubt.

Fig. 7 zeigt anschaulich einen in einer beliebigen Strebe 2 nachträglich erzeugten Knoten 3 durch allseitig montierte Konnektoren 41. Die gewindeformenden Befestigungsschrauben 46 sind so bemessen, dass sie ein eventuell im Inneren der Strebe 2 verlaufendes Gewinderohr 34 nicht behindern. Verbindungsstreben 14 werden mittels kurzer Wurmschrauben 35 geklemmt wie bereits geschildert. Es ist damit möglich, jede Fachwerkstruktur auch mittels Konnektoren aufzubauen, dabei sollten die erzielbare Stabilität und der Herstellungs- und Montageaufwand gegeneinander abgewogen werden.

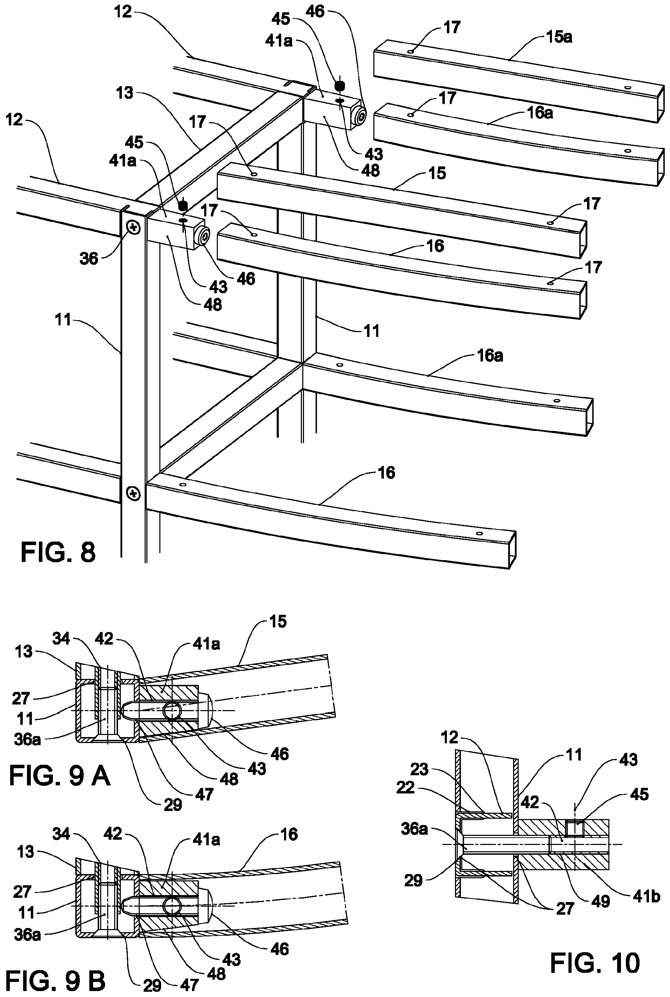

Allerdings gibt es Fälle, wo dieses Vorgehen auch erhebliche Vorteile bietet, etwa bei geschwungenen oder abgewinkelten Fachwerkstrukturen, welche allein schon durch den runden oder polygonalen Verlauf eine Steigerung ihrer Stabilität erfahren. Fig. 8 zeigt anschaulich einen Ausschnitt einer solchen Fachwerkstruktur. Die hier verwendeten Konnektoren 41a unterscheiden sich durch eine schräge Seitenfläche 48, welche das positionsgenaue Aufstecken einer gebogenen Radiusstrebe 16 oder mit einem geringen Gehrungswinkel zugeschnittenen Gehrungsstrebe 15 erlauben. Die kurze Wurmschraube 45 und das querliegende Gewinde 43 müssen senkrecht orientiert sein. Gehrungsstreben 15, deren Enden einen kleinen Gehrungswinkel bis zu wenigen Grad aufweisen, nähern eine bogenförmige Struktur durch ein Polygon an, oder erlauben eine kleine Winkeländerung der Fachwerkstruktur. Ein Vorteil dieser Ausführung liegt in der Verwendung günstigerer trapezförmiger Einlegeböden ohne gekurvte Kanten und gerader, nur auf Gehrung geschnittener Gehrungsstreben. Die innenliegenden Streben 15a, 16a sind jeweils entsprechend kürzer ausgeführt. Natürlich können mehrere solche Elemente aneinandergrenzen und zur Bildung einer Wellenform auch die Kurvenrichtung wechseln. Die gebogenen Radiusstreben 16 erhalten ihre präzise Radiusform in der Regel durch maßgenaues Ablängen einer mittels Einrollapparat als Ganzes eingerollten langen Profilstange.

Fig. 9 A zeigt eine Gehrungsverbindung im Horizontalschnitt. Der Konnektor 41a weist eine schräge Seitenfläche 48 auf, deren Neigung den maximal möglichen Gehrungswinkel der Gehrungsstrebe 15 bestimmt. Hier ist ein Gehrungswinkel von 7.5 Grad und daher eine Richtungsänderung von 15° dargestellt, mit sechs solchen Elementen entsteht ein Viertelkreis mit 90°, dessen Größe durch die gewählten Strebenlängen bestimmt wird.

Fig. 9 B zeigt eine gleichartig dimensionierte Radiusverbindung mit demselben schrägen Konnektor 41a im Horizontalschnitt. Man erkennt, dass hier auch noch Radiusstreben 16 mit weitaus kleinerem Radius verwendbar wären. Unabhängig davon kann die Richtungsänderung auch durch die Länge der Radiusstrebe 16 bestimmt werden. So könnten auch Bögen bis 90° in einem Element verwirklicht werden. Der minimal erzielbare Radius wird durch den Einrollapparat und gerade noch akzeptable Deformierungen des Strebenprofils und dessen Material bestimmt.

Es können auch 90°- oder 180°-Strebenbögen in einer vertikalen Ebene über Konnektoren 41a befestigt sein, um Elemente nach oben hin visuell abzurunden oder auskragende Elemente nach unten hin abzustützen.

Wird nur ein Gitter (5) mit einem vorhandenen Element verkettet, so erfolgt die Verspannung der Kreuzknoten wie in Fig. 10 im Vertikalschnitt dargestellt mit einer langen Schraube 36a, welche direkt in den Konnektor 41b eingeschraubt wird. Dazu weist dieser ein passendes Schraubengewinde 49 in seinem Schraubenloch 42 auf.

In weiterer Ausgestaltung der Erfindung können Streben mit rechteckigem Querschnitt, unterschiedlichen Dimensionen in den Richtungen X-Y-Z oder auch runde Distanzstreben eingesetzt werden. Auch die Tiefe der Einschnitte kann reduziert werden, etwa um einen Streben-Kantenradius durch einen kleinen Versatz der vertikalen und horizontalen Streben besser aussehen zu lassen. Das mag nicht nur eine Designfrage sein, sondern kann auch durch die Art und Befestigung der vorgesehenen Einbauten, Einschübe und Füllungen notwendig sein. Grundsätzlich ist auch eine Skalierung des Systems, vor allem hin zu massiveren Streben möglich. In diesem Fall werden die Konnektoren als Gussteile oder Abkant-Blechteile oder als Schweißkonstruktion mit gleicher Funktionalität ausgeführt.

Die Maße der Einheiten der Fachwerkstruktur können in weiten Bereichen variieren. Es können rein technisch auch Elemente mit unterschiedlichen Höhen- und Breitenmaßen verkettet werden. Es können auch beliebige einzelne Streben konstruktiv weggelassen werden, etwa für größere Einbauten, Durchgänge oder Öffnungen.

Ein Fachwerk bestehend aus nur einer Einheit kann mit aufgelegter Polsterfläche zu einer Sitzgelegenheit werden, mit mehreren Einheiten nebeneinander zu einer Bank, ein hinten nach oben verlängertes Gitter wird zur Lehne. Zwei Einheiten übereinander oder eine höhere Einheit mit Platte bilden einen Tisch. Solche Elemente sind auch in eine größere Fachwerkstruktur integrierbar, welche auch zur Ausstattung eines ganzen Raumes verwendet werden kann.

Die Streben, Konnektoren und Zugelemente können aus Stahl oder auch Aluminium sein. Ein Mischen ist nicht vorteilhaft wegen unterschiedlichen thermischen oder chemischen Verhaltens. Aluminium bietet bei fast gleicher Stabilität und Kosten den Vorteil einer raschen und einfachen Bearbeitbarkeit und Nacharbeit vor Ort, sowie geringeres Gewicht beim Transport.

Vertikale Streben (11) erhalten standardmäßig eine Verlängerung nach unten für einen Gewindestoppel mit Verstellgleiter (8), sowie Ausnehmungen (21) mit Durchgangsloch (27) eventuell mit Senkung (29). Horizontale Streben (12) erhalten standardmäßig in den Ausnehmungen (21) ein Durchgangsloch (27) und eine Zentrierung (28). Gehrungs-, Radius- und Verbindungsstreben sind an beiden Enden mit einem Spannloch (17) an vorgegebener gleicher Position versehen, ebenso weisen alle Konnektoren (41, 41a, 41b) das querliegende Gewinde an derselben Position auf.

Selbstverständlich kann eine vorhandene Fachwerkstruktur bei einer Modifikation auch ohne Beschädigung vollständig zerlegt, einige Streben und Elemente ausgetauscht und ergänzt und neu zusammengebaut werden.

## Patentansprüche

1. Rechtwinkelige Fachwerkstruktur aus vorzugsweise quadratischen Streben (2), welche in Knoten (3) zusammengehalten werden, zumeist in einem regelmäßigen Rastermaß, zur Einlage von standardisierten Böden-, Seiten- und Rückwand-Elementen und passend gefertigten eingeschobenen Kleinmöbeln mit Korpus und Tür, Laden oder offen, als designorientierter und flexibel gestalt- und bestückbarer Raumteiler in Repräsentations-, Wohn- und Arbeitsräumen, **dadurch gekennzeichnet, dass** durchgehende vertikale Streben (11) oder horizontale Streben (12) an einander kreuzenden Stellen einander zugekehrte gleichartige Ausnehmungen (21) aufweisen, welche aus zwei bis etwa zur Mitte reichenden Einschnitten (22) mit Ausrundungen (23) im mittleren Abstand der kreuzenden Strebenwände sowie der entfernten Streben-Deckfläche (24) dazwischen bestehen, dass ferner ein Durchgangsloch (27) in der gegenüber liegenden Strebenfläche (28) mittig bezüglich der Ausnehmung (21) vorhanden ist, dass die kreuzenden Streben mit ihren Ausnehmungen (21) derart ineinander greifen, dass alle Ausrundungen (23) gekreuzt ineinander zu liegen kommen und damit einen Kreuzknoten (31) bilden und mittels einer die Durchgangslöcher (27) benutzenden Schraubverbindung gegeneinander gepresst werden, wobei ein winkelstabiler Formschluss entsteht, und die zwischen den Einschnitten (22) befindlichen Laschen (25) der außen liegenden Streben optional Befestigungslöcher (47) für Verbindungsstreben (14) koaxial zu den vorhandenen Streben aufweisen können.

2. Fachwerkstruktur nach Anspruch 1, **dadurch gekennzeichnet, dass** die kreuzenden Streben (11, 12) gleichen Querschnitt mit minimalem Kantenradius aufweisen und/oder ihre Mittelachsen einander schneiden.

3. Fachwerkstruktur nach Anspruch 1 oder 2, **dadurch gekennzeichnet, dass** Konnektoren (41, 41a, 41b) vorhanden sind, welche den Innenquerschnitt der Streben (3) abzüglich notwendiger Toleranzen und ein zentrales Schraubenloch (42) für Befestigungsschrauben (46), Gewindeschrauben (46a) oder maßgleiche Nieten aufweisen, mit welchen sie in den vorhandenen oder erst zu fertigenden Befestigungslöchern (47) angeschraubt oder eingenietet werden.

4. Fachwerkstruktur nach Anspruch 3, **dadurch gekennzeichnet, dass** die Konnektoren (41, 41a, 41b) querliegende Gewinde (43) und eine darin befindliche kurze Wurmschraube (45) aufweisen, welche einen größeren Durchmesser als das koaxiale Spannloch (17) in der aufgesteckten Verbindungsstrebe (14) aufweist, durch welches sie mittels eines passenden Schraubendrehers drehbar ist und die Verbindungsstrebe (14) mit dem Konnektor (41, 41a, 41b) von innen verspannt oder löst.

5. Fachwerkstruktur nach mindestens einem der Ansprüche 1 bis 4, **dadurch gekennzeichnet, dass** vorhandene Konnektoren (41a) zumindest eine schräge Seitenfläche (48) aufweisen, welche deren querliegendes Gewinde (43) nicht beeinträchtigt und das Aufstecken und Verspannen gekrümmter Radiusstreben (16, 16a) oder mit einem kleinen Gehrungswinkel versehenen Gehrungsstreben (15, 15a) zur Erstellung von gekrümmten Fachwerkstrukturen mit Radius- oder Polygon-Elementen erlaubt.

6. Fachwerkstruktur nach mindestens einem der Ansprüche 1 bis 5, **dadurch gekennzeichnet, dass** die kreuzenden Streben (11, 12) zumindest ein vorderes und hinteres Gitter (5) und noch weitere Gitter (5) bilden, und diese Gitter an jedem Kreuzknoten (31) durch gleich lange Distanzstreben (13) gegeneinander abgestützt und durch Zug-Elemente (6), welche durch die Durchgangslöcher (27) und Distanzstreben (13) laufen, gegeneinander verspannt und damit vollständig zueinander stabilisiert sind.

7. Fachwerkstruktur nach mindestens einem der Ansprüche 1 bis 6, **dadurch gekennzeichnet, dass** Zug-Elemente (6) in der Form von Gewindestangen (35) vorhanden sind, welche durch Hülsenmuttern (37) an ihren Enden gespannt werden, oder als Innengewinde-Rohre (34) ausgeführt sind und durch Schrauben (36) an ihren Enden gespannt werden, oder eine beliebige Kombination dieser Teile vorliegt.

8. Fachwerkstruktur nach mindestens einem der Ansprüche 1 bis 7, **dadurch gekennzeichnet, dass** die Streben (2) im Bereich der Ausnehmungen (21) Zentrierungen (28) ausgeprägt haben, welche in die Innenkontur von vorhandenen Distanzstreben (13) ragen und diese präzise positionieren und ausrichten.

9. Fachwerkstruktur nach mindestens einem der Ansprüche 1 bis 8, **dadurch gekennzeichnet, dass** Distanzstreben (13) über elastische Zentrierscheiben (38) oder ähnliche Klemmelemente, welche auf Gewinderohren (34) oder Gewindestangen (35) aufgesteckt sind, positioniert werden.

10. Fachwerkstruktur nach mindestens einem der Ansprüche 1 bis 9, **dadurch gekennzeichnet, dass** Gewindestangen (35) nur an ihren Enden Gewinde tragen und durch Gewindemuffen (39) verlängerbar, und dass Innengewinderohre (34) nur an ihren Enden Gewinde aufweisen und durch lange Wurmschrauben (45a) verlängerbar sind.

11. Fachwerkstruktur nach mindestens einem der Ansprüche 1 bis 10, **dadurch gekennzeichnet, dass** die Kreuzknoten (31) eines Gitters (5) mittels Gewindeschrauben (36a) direkt mit Konnektoren (41b) verspannt sind, welche in ihrem Schraubenloch (42) ein passendes Schraubengewinde (49) aufweisen.

12. Fachwerkstruktur nach mindestens einem der Ansprüche 1 bis 11, **dadurch gekennzeichnet, dass** innen überstehende Schraubenspitzen der Befestigungsschrauben (46) von Konnektoren (41) selbst bei Montage auf allen 4 Seiten noch ausreichend Platz für ein Zugelement (6) bieten.

13. Fachwerkstruktur nach mindestens einem der Ansprüche 1 bis 12, **dadurch gekennzeichnet, dass** für vertikale Streben (11), horizontale Streben (12) und Distanzstreben (13) unterschiedliche Profile vorgesehen sind und alle Ausnehmungen (21), Löcher (17, 27, 47), Zentrierungen (28) und Konnektoren (41, 41a, 41b) maßlich adaptiert sind.

14. Fachwerkstruktur nach mindestens einem der Ansprüche 1 bis 13, **dadurch gekennzeichnet, dass** über die Tiefe der Einschnitte (22) ein Versatz zwischen vertikalen Streben (11) und horizontalen Streben (12) einstellbar ist, der einen allfällig vorstehenden Kantenradius des Strebenprofils egalisiert, eine geringere Schwächung der Streben erzeugt oder der Versatz zur Befestigung oder Positionierung der Böden, Seiten- und Rückwände oder Korpusse verwendet wird.

15. Fachwerkstruktur nach mindestens einem der Ansprüche 1 bis 14, **dadurch gekennzeichnet, dass** die Ausrundungen (23) der Einschnitte (22) durch Fasen polygonal angenähert sind.

## Claims

1. A right-angled framework structure comprising preferably square struts (2) held together at joints (3), usually in a regular grid pattern, for deposition of standardised base, side and rear wall elements and custom-made inserted small furniture units with a body and door, drawered or open, as a design-oriented and flexibly configurable and equippable room divider in reception, living and working rooms, **characterised in that** continuous vertical struts (11) or horizontal struts (12) at intersecting points feature facing recesses (21) of the same type, which consist of two cuts (22) with roundings (23) at the midpoint between the intersecting strut walls and the remote strut surface (24) in between, that furthermore a through-hole (27) is present in the opposite strut surface (28) centrally with respect to the recess (21), that the intersecting struts with their recesses (21) interlock in such a way that all roundings (23) come to lie crossed within one another, thereby forming a cross-knot (31), and are pressed against one another by means of a screw connection utilising the through-holes (27), whereby an angularly stable form fit is created, and the tabs (25) of the outer struts, located between the cuts (22), may optionally feature fixing holes (47) for connecting struts (14) coaxial with the existing struts.

2. Framework structure according to claim 1, **characterised in that** the intersecting struts (11, 12) have the same cross-section with a minimum edge radius and/or their central axes intersect one another.

3. Framework structure according to claim 1 or 2, **characterised in that** connectors (41, 41a, 41b) are present having the internal cross-section of the struts (3) minus necessary tolerances and a central screw hole (42) for fixing screws (46), threaded screws (46a) or dimensionally matching rivets, with which they are screwed or riveted into the existing or yet-to-be-machined fixing holes (47).

4. Framework structure according to claim 3, **characterised in that** the connectors (41, 41a, 41b) comprise transverse threads (43) and a short worm screw (45) located therein, which has a larger diameter than the coaxial clamping hole (17) in the pinned on connecting strut (14), through which it can be rotated by means of a suitable screwdriver and which tightens or loosens the connecting strut (14) with the connector (41, 41a, 41b) from the inside.

5. Framework structure according to at least one of claims 1 to 4, **characterised in that** existing connectors (41a) have at least one sloping side surface (48) which does not interfere with the transverse thread (43) and permits the attachment and clamping of curved radius struts (16, 16a) or mitre struts (15, 15a) with a small mitre angle for the construction of curved framework structures with radius or polygon elements.

6. Framework structure according to at least one of claims 1 to 5, **characterised in that** the intersecting struts (11, 12) form at least one front and rear lattice (5) and further lattices (5), and these lattices are supported against one another at each cross-node (31) by equally long spacer struts (13) and are braced against one another by tension elements (6), which pass through the through-holes (27) and spacer struts (13), and are thus fully stabilised relative to one another.

7. Framework structure according to at least one of claims 1 to 6, **characterised in that** tension elements (6) designed as threaded rods (35) are present and are tightened at their ends by sleeve nuts (37), or are designed as inner-thread tubes (34) and are tightened at their ends by screws (36), or any combination of these parts is present.

8. Framework structure according to at least one of claims 1 to 7, **characterised in that** the struts (2) have centring elements (28) formed in the region of the recesses (21), which project into the inner contour of existing spacer struts (13) and precisely position and align them.

9. Framework structure according to at least one of claims 1 to 8, **characterised in that** the spacer struts (13) are positioned by means of elastic centring washers (38) or similar clamping elements, which are fitted onto threaded tubes (34) or threaded rods (35).

10. Framework structure according to at least one of claims 1 to 9, **characterised in that** threaded rods (35) are threaded only at their ends and can be extended by threaded sleeves (39), and that inner-thread tubes (34) are threaded only at their ends and can be extended by long worm screws (45a).

11. Framework structure according to at least one of claims 1 to 10, **characterised in that** the cross-nodes (31) of a lattice (5) are braced directly to connectors (41b) by means of threaded screws (36a), which have a matching screw thread (49) in their screw hole (42).

12. Framework structure according to at least one of claims 1 to 11, **characterised in that** screw tips of the fastening screws (46) of the connectors (41), which protrude on the inside, still provide sufficient space for a tension element (6) even when mounted on all four sides.

13. Framework structure according to at least one of claims 1 to 12, **characterised in that** different profiles are provided for vertical struts (11), horizontal struts (12) and spacer struts (13), and all recesses (21), holes (17, 27, 47), centring elements (28) and connectors (41, 41a, 41b) are dimensionally adapted.

14. Framework structure according to at least one of claims 1 to 13, **characterised in that** along the depth of the cuts (22) an offset between vertical struts (11) and horizontal struts (12) can be adjusted, which compensates any protruding edge radius of the strut profile, results in less weakening of the struts, or the offset is used for fastening or positioning of the base, side and rear walls or carcasses.

15. Framework structure according to at least one of claims 1 to 14, **characterised in that** the roundings (23) of the cuts (22) are approximated polygonally by chamfers.

## Revendications

1. Structure en treillis à angle droit, constituée d'entretoises (2), de préférence carrées, qui sont maintenues assemblées dans des nœuds (3), la plupart du temps avec un pas régulier, en vue de l'insertion d'éléments formant tablettes, d'éléments latéraux et d'éléments de paroi arrière standardisés et de petits meubles encastrés, fabriqués sur mesure et dotés d'un corps et d'une porte, de tiroirs ou ouverts, faisant office de cloisons de séparation de pièces axées sur le design et pouvant faire l'objet d'une conception et d'un équipement flexibles, dans des locaux de représentation, d'habitation et de travail, **caractérisée en ce que** des entretoises verticales (11) ou des entretoises horizontales (12) continues présentent, à des emplacements qui se croisent, des évidements (21) similaires qui sont tournés les uns vers les autres et sont constitués de deux encoches (22) s'étendant à peu près jusqu'au milieu et comportant des arrondis (23), à mi-distance entre les parois d'entretoises qui se croisent et la surface de dessus d'entretoise (24) éloignée, **en ce qu'**en outre un trou traversant (27) est prévu dans la surface d'entretoise (28) située en vis-à-vis, de manière centrée par rapport à l'évidement (21), **en ce que** les entretoises qui se croisent s'engagent les unes dans les autres avec leurs évidements (21), de manière à ce que l'ensemble des arrondis (23) soient engagés les uns dans les autres de façon croisée et forment ainsi un nœud en croix (31) et soient pressés les uns contre les autres par un assemblage à vis utilisant les trous traversants (27), créant ainsi une complémentarité de formes à angle stable, et les pattes (25) des entretoises situées à l'extérieur, qui se trouvent entre les encoches (22), pouvant présenter de manière facultative des trous de fixation (47) pour des entretoises d'assemblage (14), coaxialement avec les entretoises existantes.

2. Structure en treillis selon la revendication 1, **caractérisée en ce que** les entretoises (11, 12) qui se croisent présentent la même section transversale à rayon d'arête minimal et/ou que leurs axes médians se coupent mutuellement.

3. Structure en treillis selon la revendication 1 ou 2, **caractérisée en ce qu'**il est prévu des connecteurs (41, 41a, 41b) qui présentent la section intérieure des entretoises (3), déduction faite des tolérances nécessaires, et un trou de vis (42) central pour des vis de fixation (46), des boulons filetés (46a) ou des rivets aux mêmes dimensions, avec lesquels ils sont vissés ou rivetés dans les trous de fixation (47) existants ou devant être réalisés.

4. Structure en treillis selon la revendication 3, **caractérisée en ce que** les connecteurs (41, 41a, 41b) présentent des taraudages (43) transversaux et un goujon fileté (45) de faible longueur qui est disposé dans ceux-ci et présente un diamètre supérieur à celui du trou de serrage (17) coaxial dans l'entretoise d'assemblage (14) rapportée, à travers lequel il peut être vissé au moyen d'un tournevis adapté et serre ou desserre de l'intérieur l'entretoise d'assemblage (14) avec le connecteur (41, 41a, 41b).

5. Structure en treillis selon au moins une des revendications 1 à 4, **caractérisée en ce que** des connecteurs (41a) présents comportent au moins une face latérale (48) oblique qui ne gêne pas leur taraudage (43) transversal et permet l'emboîtement et le serrage d'entretoises radiales (16, 16a) courbes ou d'entretoises en onglet (15, 15a) dotées d'un faible angle d'onglet, aux fins de réaliser des structures en treillis courbes avec des éléments radiaux ou polygonaux.

6. Structure en treillis selon au moins une des revendications 1 à 5, **caractérisée en ce que** les entretoises (11, 12) qui se croisent forment au moins une grille avant et arrière (5) ainsi que des grilles supplémentaires (5), et que ces grilles sont en appui les unes par rapport aux autres dans chaque nœud en croix (31), du fait d'entretoises d'écartement (13) de longueur identique, et sont serrées les unes contre les autres, et par conséquent totalement stabilisées les unes vis-à-vis des autres, par des éléments de traction (6) qui passent dans les trous traversants (27) et les entretoises d'écartement (13).

7. Structure en treillis selon au moins une des revendications 1 à 6, **caractérisée en ce que** des éléments de traction (6) sont prévus sous la forme de tiges filetées (35) qui sont serrées à leurs extrémités par des écrous douilles (37), ou sont réalisés sous forme de tubes taraudés (34) et sont serrés à leurs extrémités par des vis (36), ou qu'il existe n'importe quelle combinaison de ces éléments.

8. Structure en treillis selon au moins une des revendications 1 à 7, **caractérisée en ce que** les entretoises (2) comportent, dans la région des évidements (21), des centrages (28) façonnés qui pénètrent dans le contour interne d'entretoises d'écartement (13) présentes et les positionnent et les orientent de manière précise.

9. Structure en treillis selon au moins une des revendications 1 à 8, **caractérisée en ce que** des entretoises d'écartement (13) sont positionnées par l'intermédiaire de disques de centrage (38) élastiques ou d'éléments de serrage similaires, qui sont rapportés sur des tubes taraudés (34) ou des tiges filetées (35).

10. Structure en treillis selon au moins une des revendications 1 à 9, **caractérisée en ce que** des tiges filetées (35) portent des filetages uniquement à leurs extrémités et peuvent être prolongées par des manchons taraudés (39), et **en ce que** des tubes taraudés (34) présentent des filetages uniquement à leurs extrémités et peuvent être prolongés par des goujons filetés (45a) de grande longueur

11. Structure en treillis selon au moins une des revendications 1 à 10, **caractérisée en ce que** les nœuds en croix (31) d'une grille (5) sont serrés au moyen de boulons filetés (36a) directement avec des connecteurs (41b) qui comportent dans leur trou de vis (42) un filetage de vis (49) adapté.

12. Structure en treillis selon au moins une des revendications 1 à 11, **caractérisée en ce que** des pointes des vis de fixation (46) de connecteurs (41) qui dépassent à l'intérieur laissent encore suffisamment de place pour un élément de traction (6), même en cas de montage sur les quatre côtés.

13. Structure en treillis selon au moins une des revendications 1 à 12, **caractérisée en ce que** des profils différents sont prévus pour des entretoises verticales (11), des entretoises horizontales (12) et des entretoises d'écartement (13), et que tous les évidements (21), trous (17, 27, 47), centrages (28) et connecteurs (41, 41a, 41b) sont adaptés en termes de dimensions.

14. Structure en treillis selon au moins une des revendications 1 à 13, **caractérisée en ce que** sur la profondeur des encoches (22), il est possible de régler entre des entretoises verticales (11) et des entretoises horizontales (12), un décalage qui égalise un rayon d'arête éventuellement saillant du profil d'entretoise ou engendre un affaiblissement moindre des entretoises, ou que le décalage est utilisé pour la fixation ou le positionnement des tablettes, des parois latérales et de fond ou des corps.

15. Structure en treillis selon au moins une des revendications 1 à 14, **caractérisée en ce que** les arrondis (23) des encoches (22) sont rendus proches d'une forme polygonale par des chanfreins.
